# EUROPEAN PATENT SPECIFICATION

(11) **EP 1 962 183 B1**
(45) Date of publication and mention of the grant of the patent: **13.07.2011**
(21) Application number: 08002749.3
(22) Date of filing: 14.02.2008
(51) Int. Cl.: G06F 9/24

(54) **Method and apparatus for fast ethernet controller operation using a virtual CPU**
Verfahren und Vorrichtung für einen schnellen Ethernetsteuerungsbetrieb über eine virtuelle CPU
Procédé et appareil pour opérations de contrôleur Ethernet rapide utilisant une unité centrale virtuelle

(30) Priority: 22.02.2007 US 677935
(43) Date of publication of application: 27.08.2008
(73) Proprietor: Broadcom Corporation, Irvine, CA 92617 (US)
(72) Inventor: Wang, Wei, San Jose, CA 95129 (US); Lee, Jonathan F., Dublin, CA 94568 (US)
(74) Representative: Jehle, Volker Armin

(56) References cited:
- WO-A-02/084499
- WO-A-2004/023722
- FR-A1- 2 598 531
- GB-A- 2 320 592
- US-A- 5 177 800
- US-A1- 2005 283 586
- US-A1- 2006 036 877
- US-A1- 2007 038 425
- TURTON T: "A PROPOSED HIGH-SPEED COMPUTER DESIGN" COMPUTER ARCHITECTURE NEWS, ACM, NEW YORK, NY, US, vol. 7, no. 10, 1 October 1979 (1979-10-01), pages 7-21, XP007905572 ISSN: 0163-5964
- DATABASE INSPEC [Online] THE INSTITUTION OF ELECTRICAL ENGINEERS, STEVENAGE, GB; 2003, HOLLER R: "FPGAs for high accuracy clock synchronization over Ethernet networks" XP002494206 Database accession no. 7921675 & INTERNATIONAL CONFERENCE ON FIELD-PROGRAMMABLE LOGIC 1-3 SEPT. 2003 LISBON, PORTUGAL, 2003, pages 960-963, Field-Programmable Logic and Applications. 13th International Conference, FPL 2003. Proceedings (Lecture Notes in Comput. Sci. Vol.2778) Springer-Verlag Berlin, Germany ISBN: 3-540-40822-3
- DATABASE INSPEC [Online] THE INSTITUTION OF ELECTRICAL ENGINEERS, STEVENAGE, GB; 2006, FUJIYAMA H: "System-on-a-chip with security modules for network home electric appliances" XP002494207 Database accession no. 8917107 & Fujitsu Scientific and Technical Journal Fujitsu Japan, vol. 42, no. 2, April 2006 (2006-04), pages 227-233, ISSN: 0016-2523

## Description

This application makes reference to: United States Patent Application Serial No. 11/673,348 filed on February 9, 2007.

The above stated application is hereby incorporated herein by reference in its entirety.

### FEDERALLY SPONSORED RESEARCH OR DEVELOPMENT

[Not Applicable]

### [MICROFICHE/COPYRIGHT REFERENCE]

[Not Applicable]

### FIELD OF THE INVENTION

Certain embodiments of the invention relate to media access control. More specifically, certain embodiments of the invention relate to a method and system for fast Ethernet controller operation using a virtual CPU.

### BACKGROUND OF THE INVENTION

High-speed digital communication networks over copper and optical fiber are used in many network communication and digital storage applications. Ethernet and Fiber Channel are two widely used communication protocols, which continue to evolve in response to increasing demands for higher bandwidth in digital communication systems.

The Ethernet protocol may provide collision detection and carrier sensing in the physical layer. The physical layer, layer 1, is responsible for handling all electrical, optical, opto-electrical and mechanical requirements for interfacing to the communication media. Notably, the physical layer may facilitate the transfer of electrical signals representing an information bitstream. The physical layer may also provide services such as, encoding, decoding, synchronization, clock data recovery, and transmission and reception of bit streams.

As the demand for higher data rates and bandwidth continues to increase, equipment vendors are continuously being forced to employ new design techniques for manufacturing network layer 1 equipment capable of handling these increased data rates. Chip real estate and printed circuit board (PCB) real estate is generally extremely expensive. Accordingly, the use of available chip and PCB real estate is therefore a critical fabrication consideration when designing chips and/or circuit boards. Particularly in high speed applications operating at high frequencies, a high device count and pin count may result in designs that are susceptible to interference. Notably, high device and pin counts may significantly increase chip real estate and accordingly, significantly increase implementation cost.

The embedded processors in network communication chips are a substantial part of the overall chip cost and may utilize large areas of the die. Embedded processors such as MIPS or ARM processors may add substantial cost to the chip-making process through licensing fees, and may have unnecessary capabilities when utilized in specific applications. WO 2004/023722 A1 discloses a plurality of data switches such as Ethernet switches that are connected to each other using their ports for receiving and transmitting packets. A given one of the switches operates as a master switch which transmits instructions to the other switches as command packets, and receives responses back from them as response packets. The slave switches are connected pairwise. The command packets pass through the network until they reach a slave switch to implement them, and the response packets pass through the network to the master switch. GB 2 320 592 discloses an electronic appliance incorporating a microprocessor for controlling the working of the appliance, the microprocessor having firmware stored on an internal read only memory, input and output terminals, the improvement comprising an external source of data coupled to one input terminal of the microprocessor, at least one set of instructions in the ROM being used to read data from said external source of data when a control signal on one or more input terminals has a predetermined value. The external source may be an EEPROM, the external data being used to correct or upgrade the firmware.

Further limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

A system and/or method for fast Ethernet controller operation using a virtual CPU, substantially as shown in and/or described in connection with at least one of the figures, as set forth more completely in the claims.

According to an aspect, a method is provided for network communication control, the method comprising:
controlling an on-chip Ethernet controller utilizing a virtual CPU comprising a microcode engine that loads a single instruction and executes said instruction prior to loading or executing a subsequent instruction.

Advantageously, the method further comprises fetching said instructions by said virtual CPU from an external non-volatile memory.

Advantageously, the method further comprises fetching said instructions by said virtual CPU from an on-chip ROM.

Advantageously, said virtual CPU initializes said Ethernet controller.

Advantageously, said virtual CPU provides patches for supporting hardware workarounds.

Advantageously, said virtual CPU provides wake on LAN service.

Advantageously, said virtual CPU provides VPD service.

Advantageously, said VPD services includes VPD data comprising serial number, product name, manufacturer and related manufacturing data.

Advantageously, the method further comprises initiating power down of said Ethernet controller via a particular command and procedure.

Advantageously, the method further comprises halting said virtual CPU based on said power down initiation.

According to an aspect of the invention, a system for network communication control is provided, the system comprising:
a virtual CPU comprising a microcode engine that enables controlling an on-chip Ethernet controller, wherein said microcode engine loads a single instruction and executes said instruction prior to loading or executing a subsequent instruction.

Advantageously, said virtual CPU enables fetching said instructions from an external non-volatile memory.

Advantageously, said virtual CPU enables fetching said instructions by said virtual CPU from an on-chip ROM.

Advantageously, said virtual CPU enables initialization of said Ethernet controller.

Advantageously, said virtual CPU provides patches for supporting hardware workarounds.

Advantageously, said virtual CPU provides wake on LAN service.

Advantageously, said virtual CPU provides VPD service.

Advantageously, said VPD service includes VPD data comprising serial number, product name, manufacturer and related manufacturing data.

Advantageously, said virtual CPU initiates power down of said Ethernet controller via a particular command and procedure.

Advantageously, said virtual CPU enables halting of said virtual CPU based on said power down initiation.

According to an aspect of the invention, a machine-readable storage is provided having stored thereon, a computer program having at least one code section for network communication control, the at least one code section being executable by a machine for causing the machine to perform steps comprising:
controlling an on-chip Ethernet controller utilizing a virtual CPU comprising a microcode engine that loads a single instruction and executes said instruction prior to loading or executing a subsequent instruction.

Advantageously, said at least one code section comprises code for fetching said instructions by said virtual CPU from an external non-volatile memory.

Advantageously, said at least one code section comprises code for fetching said instructions by said virtual CPU from an on-chip ROM.

Advantageously, said at least one code section comprises code for wherein initializing said Ethernet controller via said virtual CPU.

Advantageously, said at least one code section comprises code for providing patches for supporting hardware workarounds.

Advantageously, said at least one code section comprises code for providing wake on LAN service via said virtual CPU.

Advantageously, said at least one code section comprises code for providing VPD service via said virtual CPU.

Advantageously, said VPD service includes VPD data comprising serial number, product name, manufacturer and related manufacturing data.

Advantageously, said at least one code section comprises code for initiating power down of said Ethernet controller via a particular command and procedure.

Advantageously, said at least one code section comprises code for halting said virtual CPU based on said power down initiation.

Various advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram illustrating an exemplary Ethernet controller in accordance with an embodiment of the invention.

FIG. 2A is a block diagram illustrating an exemplary virtual CPU implementation with related function blocks, in accordance with an embodiment of the invention.

FIG. 2B is a block diagram illustrating an exemplary data structure of a non-volatile memory that may store the microcode instructions, in accordance with an embodiment of the invention.

FIG. 3A is a block diagram illustrating an exemplary virtual CPU Ethernet controller, in accordance with an embodiment of the invention.

FIG. 3B is a block diagram illustrating an exemplary format for the VCPU Ethernet controller EEPROM image, in accordance with an embodiment of the invention.

FIG. 3C is a block diagram illustrating a second exemplary format for the VCPU Ethernet controller EEPROM image, in accordance with an embodiment of the invention.

FIG. 4 is a flow diagram illustrating an exemplary VCPU operational process, in accordance with an embodiment of the invention.

FIG. 5 is a flow diagram illustrating an exemplary VCPU device initialization process, in accordance with an embodiment of the invention.

FIG. 6 is a flow diagram illustrating an exemplary VCPU VPD service process, in accordance with an embodiment of the invention.

FIG. 7 is a flow diagram illustrating an exemplary VCPU WOL service process, in accordance with an embodiment of the invention.

### DETAILED DESCRIPTION OF THE INVENTION

Certain aspects of the invention may be found in a method and system for fast Ethernet controller operation using a virtual CPU. Exemplary aspects of the invention may include controlling an on-chip Ethernet controller utilizing a virtual CPU comprising a microcode engine that loads a single instruction and executes this single instruction prior to loading or executing a subsequent instruction. The instructions may be fetched by the virtual CPU from an external non-volatile memory or on-chip ROM. The virtual CPU may initialize the Ethernet controller and provide patches for supporting hardware workarounds, wake on LAN service, and vital production data such as serial number, product name, manufacturer and related manufacturing data. The virtual CPU may power down the Ethernet controller and may be halted via a particular command and procedure.

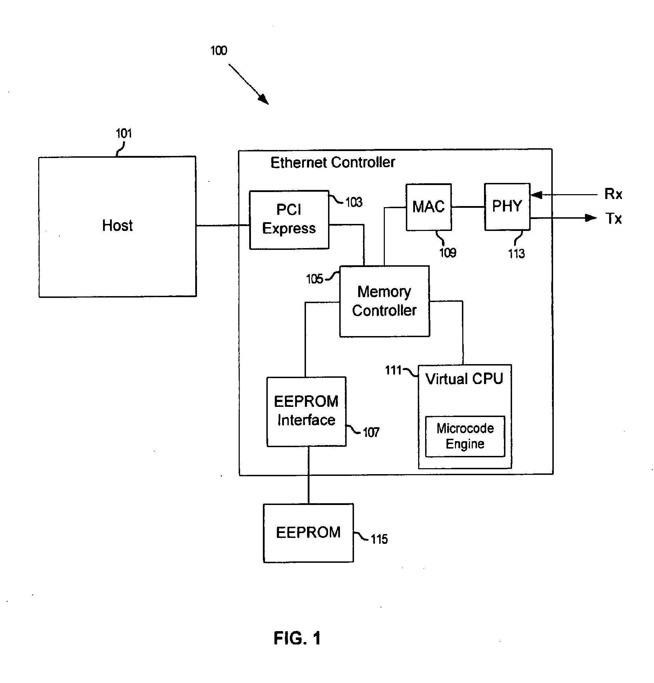

FIG. 1 is a block diagram illustrating an exemplary Ethernet controller in accordance with an embodiment of the invention. Referring to FIG. 1, there is shown a host 101, an EEPROM 115 and an Ethernet controller 100 comprising a virtual CPU (VCPU) 111, a memory controller 105, a PCI Express interface 103, an EEPROM interface 107, a media access controller (MAC) 109 and a physical interface transceiver (PHY) 113.

The host 101 may comprise suitable circuitry, logic, and/or code that may be enabled to communicate with a LAN utilizing the Ethernet controller 100. The host 101 may comprise a computer, for example, and may communicate with the Ethernet controller 100 via the PCI Express interface 103.

The PCl Express interface 103 may comprise suitable circuitry, logic and/or code that may be enabled to provide a serial interconnect between the host 101 and the memory controller 105. Communication via the PCl Express interface 103 may comply with the PCI-SIG standard.

The memory controller 105 may comprise suitable circuitry, logic and/or code that may be enabled to control access of the VCPU 111 and/or the host 101 to the EEPROM 115 and the MAC and PHY 109 and 113, respectively. The memory controller 105 may comprise a general register controller (GRC) and may allow transmission and reception of single characters, configuration and status readback. The memory controller 105 may respond to write and read requests received from the host 101, the VCPU 111 or other peripheral devices not shown.

The EEPROM interface 107 may comprise suitable circuitry, logic and/or code that may be enabled to send and receive signals from the EEPROM 115 and the memory controller 105. The EEPROM interface 107 may communicate read, write, or EEPROM reset data, for example, to the EEPROM 115, and may receive data to be written to the EEPROM 115 from the memory controller 105.

The EEPROM 115 may comprise suitable circuitry, logic and/or code that may be enabled to store data, such as device configuration information, that may require storage in a non-volatile memory. The device configuration information may include but is not limited to, MAC address, device ID, vendor ID, subsystem vendor ID, subsystem device ID, vital product data (VPD), boot code data and power up boot code. The storage of this data on an external EEPROM may significantly reduce memory requirements of the VCPU 111. In addition, patch code may be stored in the EEPROM 115 to provide a workaround for hardware errors.

The VCPU 111 may comprise suitable circuitry, logic, and/or code that may be adapted to perform the functions of a CPU, but without the dedicated hardware necessary for a CPU core. The VCPU 111 may be utilized to replace embedded CPUs such as MIPS or ARM. The VCPU 111 may comprise a microcode engine with a series of instruction executions for functions such as device initialization, VPD, wake on LAN (WOL) and alert standard format (ASF) services. By storing data on an external non-volatile memory, such as the EEPROM 115, the die size requirements for the VCPU 111 may be significantly less than an embedded processor, such as MIPS or ARM. The VCPU 111 may not require on-chip cache or program/data memory, and may fetch and execute instructions one-by-one, thus generating an application specific processor without extra functionality not needed for a particular application. Use of the VCPU 111 may not only result in reduced die size requirements, but may also result in significant cost reduction. In the present invention, the VCPU 111 may be used in an Ethernet controller 100, but the application of the VCPU 111 is not limited in this regard.

The MAC 109 may comprise suitable circuitry, logic, and/or code that may be enabled to provide addressing and channel access control mechanisms, and serve as an interface between the memory controller 105 and the PHY 113. The MAC 109 may generate and parse physical frames to be transmitted to a network by the PHY 113. The PHY 113 may comprise suitable circuitry, logic, and/or code that may be enabled to send and receive signals to/from a LAN or other network. The PHY 113 may control a manner in which data may be transmitted and/or received over the physical connection, such as a twisted pair cable. The MAC 109 and the PHY 113 may communicate using a media independent interface (MII) protocol. The PHY 113 may control transmission criteria such as line speed, duplex mode, modulation scheme, etc.

In operation, the Ethernet controller may be utilized to communicate over a LAN or other network. The VCPU 111 may perform control functions within the Ethernet controller 100 that may include, but is not limited to hardware initialization, runtime workaround support, WOL support, boot agent setup, etc. Runtime workaround support may be utilized in instances where there are hardware errors or requirement changes after the chip has been fabricated, thus eliminating multiple hardware changes. WOL support may be utilized to wake a sleeping system by sending a wake signal over the network. This may allow for remote maintenance or upgrading of multiple computers on a network, eliminating the need to be physically present at the location of every system. Boot agent support may allow a networked system to boot using a program code supplied by a remote server. The EEPROM 115 may store non-changing data that may be utilized by the VCPU 111 to control the Ethernet controller 100. The host 101 may communicate with the Ethernet controller 100 via the PCI Express interface 103, and the Ethernet controller 100 may communicate with a LAN or other network via the PHY 113.

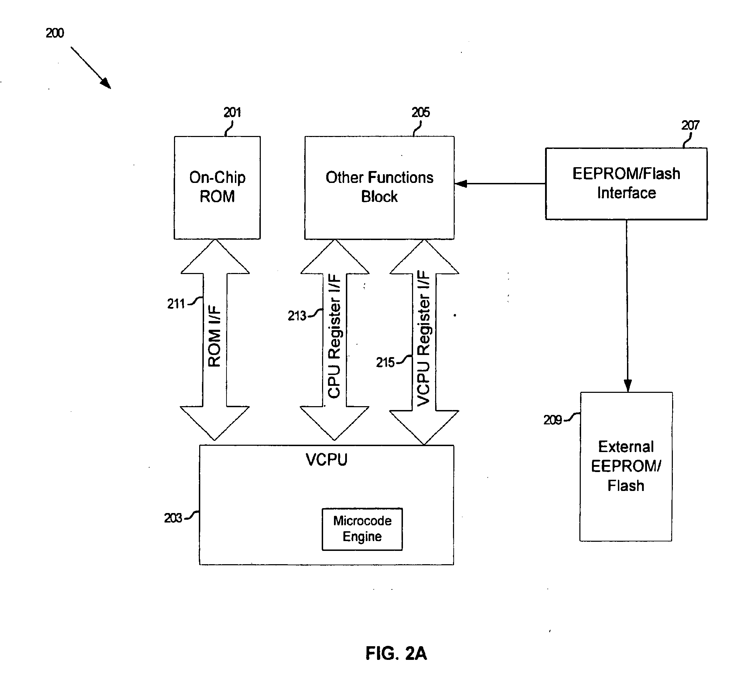

FIG. 2A is a block diagram illustrating a virtual CPU implementation with related function blocks, in accordance with an embodiment of the invention. Referring to FIG. 2A, there is shown a virtual CPU implementation 200 comprising a VCPU 203, an on-chip ROM 201, an EEPROM/Flash interface 207, an external EEPROM/Flash 209, a ROM interface 211, a CPU register interface 213, a VCPU register interface 215 and an other functions block 205. The VCPU 203, the EEPROM/Flash interface 207, and the external EEPROM/Flash 209 may be substantially similar to the VCPU 111, the EEPROM interface 107 and the EEPROM 115, described with respect to FIG. 1. The on-chip ROM 201 may comprise suitable circuitry, logic, and/or code that may be enabled to store data such as microcode instructions utilized by the VCPU 203. The on-chip ROM 201 may be accessed utilizing the ROM interface 211.

The other functions block 205 may comprise interfaces to other functional blocks such as a host CPU, an Ethernet controller, or other circuitry requiring an embedded processor. The VCPU 203 may access the other functions block 205 and the external EEPROM/Flash 209 via the VCPU register interface 215.

The VCPU 203 may comprise a series of instruction executions. In an exemplary embodiment, each instruction may comprise parity bits, op-code, register address and write data / read data operand. Table 1 below illustrates the structure of the 64-bit instruction utilized by the VCPU 203.

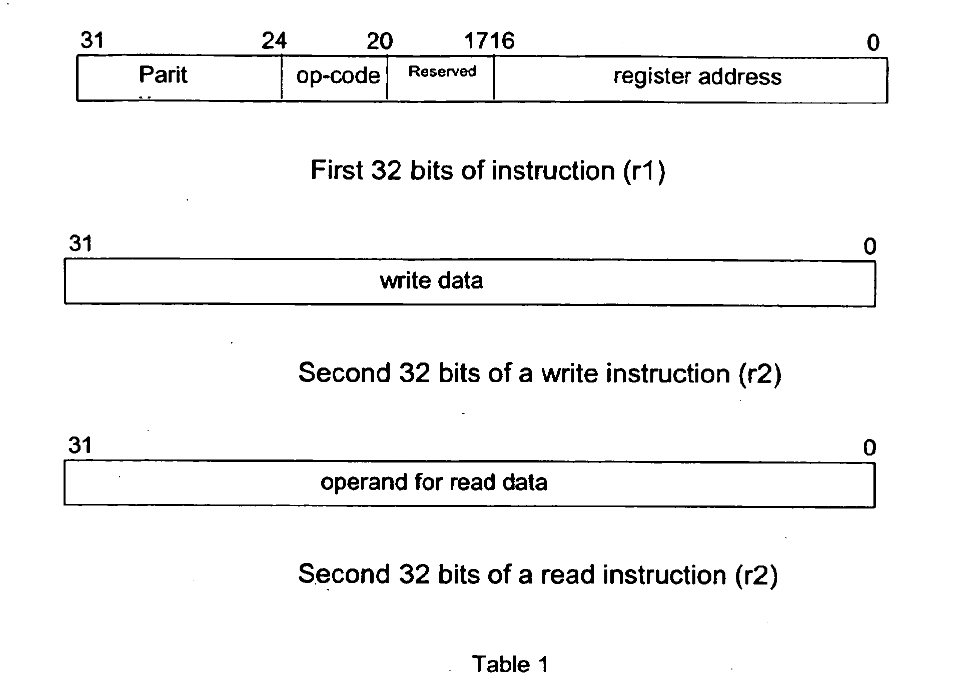

In instances where the op-code is for the register operation, the 17-bit address field may be the register byte address. In instances where the op-code may be for the jump operation, the address field may be the ROM/EEPROM/ Flash byte address. Bit 24 may be used to indicate whether to utilize the on-chip ROM 201 address or the external EEPROM/Flash 209 address. If bit 24 is set, it may indicate the on-chip ROM address. Otherwise, it may indicate the external EEPROM/Flash address. The total address mapping range may be from 0 to 128KB. Exemplary definitions for the op-code are shown below in Table 2.

**Table 2**

| Op Code | Definition |
|---|---|
| 0000 | Idle. The VCPU may stop execution when fetching an Idle instruction. |
| 0001 | Register write. The VCPU may write to the register |
| 0010 | address specified in r1 with the write data specified in r2. Set bits in the holding register¹. The VCPU may set those bits in the holding register with a '1' in the r2 field. This may be equivalent to logically OR the content of the holding register with r2. In conjunction with the load and store instructions, this instruction may be useful to set only certain bits in the programming register. |
| 0011 | Clear bits in the Holding register¹. The VCPU may clear those bits in the holding register with a '1' in the r2 field. In conjunction with the load and store instructions, this instruction may be useful to clear only certain bits in the programming register. |
| 0100 | Wait until bits are Set. The VCPU may keep reading the register address until those bits with a 1 in the r2 field are set. After that, it may continue to execute the next instruction. |
| 0101 | Wait until bits are Clear. The VCPU may keep reading the register address until those bits with a 1 in the r2 field are clear. After that, it may continue to execute the next instruction. |
| 0110 | Skip next instruction if the masked value from the addressed register is equal to Data register. The VCPU may read the register address specified in r1, and logically AND with the value from the r2 field. Compare the masked value with VCPU Data register (a VCPU register which can be read/written by any agent, such as a host and/or VCPU). If both values are equal, skip the next instruction. Otherwise, read the next instruction. |
| 1000 | Unconditional Jump. The VCPU may jump to a different ROM or EEPROM/Flash address that is r1 plus code starting address. If "VPD Enable" in configuration is set, the code starting address may be "addr1" at EEPROM/Flash. Otherwise, it may be "addr2". For on-chip ROM, the code starting address may equal 0. Notice that r1, in this case does not specify the internal register address. |
| 1010 | Skip next instruction if register bits are set. The VCPU may read the register address specified in r1, and check if those bits with a '1' specified in the r2 field, are set. If it is true, then skip the next instruction stored at the next ROM/EEPROM/Flash location. |
| 1011 | Skip next instruction if register bits are clear. The VCPU may read the register address specified in r1, and check if those bits with a '1' specified in the r2 field, are clear. If it is true, then the next instruction stored at the next ROM/EEPROM/Flash location may be skipped. |
| 1100 | Load the value from the addressed register to the internal Holding register¹. The VCPU may read the register address specified in r1, and logically AND with the value from the r2 field. Then the VCPU may store the result in the internal Holding register. If r1 bit24 is set, the lower half-word of the register read data may be swapped with the higher half-word before it may be ANDed with the r2 field. |
| 1101 | Store the value from the internal holding register¹ to the addressed register. VCPU may write the value stored in the internal holding register to the register address specified in r1. |
| 1110 | Load the value from the addressed register, and added to the VCPU Data register. The VCPU will read the register address specified in r1, AND-ed with the value from r2 field and added with the value from the VCPU Data register. Then store the result in the VCPU Data register. If r1 bit24 is set, the lower half-word of the register read data will be swapped with the higher half-word before it's added with the VCPU Data register. |
| 1111 | Store the value from the VCPU Data register to the addressed register. The VCPU may write the value stored in the VCPU Data register to the register address specified in r1. |

| | |
|---|---|
| ¹The holding register may be a 32-bit internal register that temporarily stores the value read by the load instruction, which may later be modified or used as write data by the store instruction. | |

An exemplary definition of r1 and the register address field is shown below in Table 3.

**Table 3**

| Bit | Definition |
|---|---|
| 31 | Parity bit for r1 bits 23:16. |
| 30 | Parity bit for r1 bits 15:8. |
| 29 | Parity bit for r1 bits 7:0. |
| 28 | Parity bit for r2 bits 31:24 |
| 27 | Parity bit for r2 bits 23:16 |
| 26 | Parity bit for r2 bits 15:8 |
| 25 | Parity bit for r2 bits 7:0 |
| 24 | Address space or Swap half words depending on the instruction. For the Jump instruction (e.g. 1000): If the bit is '0', it may jump to the external EEPROM/Flash address specified in bits 16:0. If the bit is '1', it may jump to the internal ROM address specified in bits 16:0. For the Load instruction (e.g. 1100 and 1110): If the bit is '0', the register read data may be stored as-is in the Holding register. If the bit is '1', the lower half-word may be swapped with the upper half-word of the register read data before storing into the holding register. |
| 23 to 20 | op-code |
| 19 to 17 | Reserved |
| 16 to 0 | Internal register address or ROM/EEPROM/Flash instruction jump address. |

The VCPU 203 may access the other function blocks 205 and external EEPROM/Flash 209 via the VCPU register interface 215. Other CPUs may access the VCPU 203 via a CPU register interface 213. The dedicated on-chip ROM 201 may be utilized for the VCPU 203 microcode, and may be connected through a ROM interface 211. Therefore, this microcode structure may be exploited to achieve greater flexibility and reduced cost, since developers may customize the VCPU 203 microcode by partitioning the microcode in the on-chip ROM 201 and the external EEPROM/Flash 209 to reach cost and scalability goals.

The VCPU 203 may be different from common embedded processors/microcontrollers which load the whole executable program code or microcode to the on-chip program memory (e.g., SRAM), and then executes it. Instead, the VCPU 203 may fetch one microcode instruction, execute it instantly, and then proceed to fetch the next instruction and then execute it. Hence an image loader as well as program memory are not needed. Instead, a hardware finite-state-machine (FSM) may act as an image loader to fetch the microcode instructions from the external EEPROM/Flash 209 or on-chip ROM 201 in terms of the context instructions.

The VCPU 203 may offer a level of debug capability. The program counter which traces the location of the executed instruction may be read. Other CPUs or a debug agent may halt the VCPU 203 at any point. When a halt control register is set, the VCPU 203 may complete the current instruction fetch and execution, and then stop in the location of the present instruction. If the halt control register is cleared, the VCPU 203 may resume from the next instruction. In addition, the microcode may be protected by the parity bits. Any code corruption may be detected by the parity bits in the instruction. Any abnormal behavior may be alarmed and sent to the status register for debugging purposes.

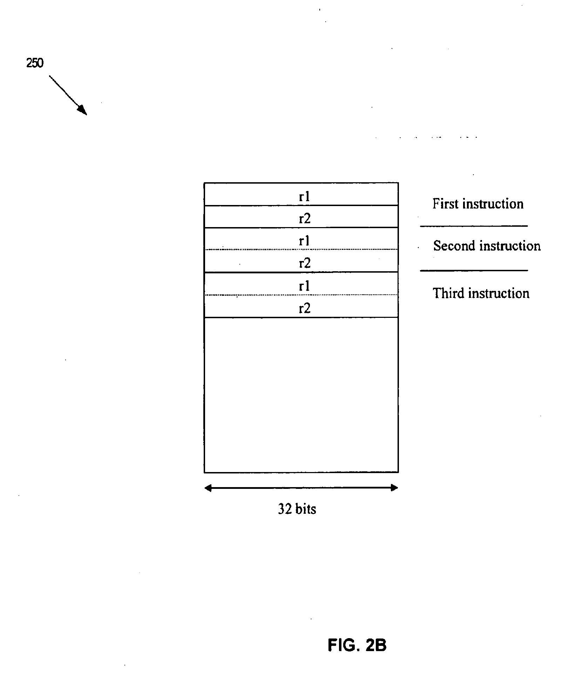

FIG. 2B is a block diagram illustrating an exemplary data structure of a non-volatile memory that may store the microcode instructions, in accordance with an embodiment of the invention. Referring to FIG. 2B, there is shown the data structure for data to be read or written by the VCPU 203. The first instruction may comprise two 32-bit lines, the first of which may comprise the register address, op-code and parity, and the second 32-bit line may comprise the read data operand or write data, as shown in Table 1. This sequence continues with the second instruction comprising two 32-bit lines, then the third, etc.

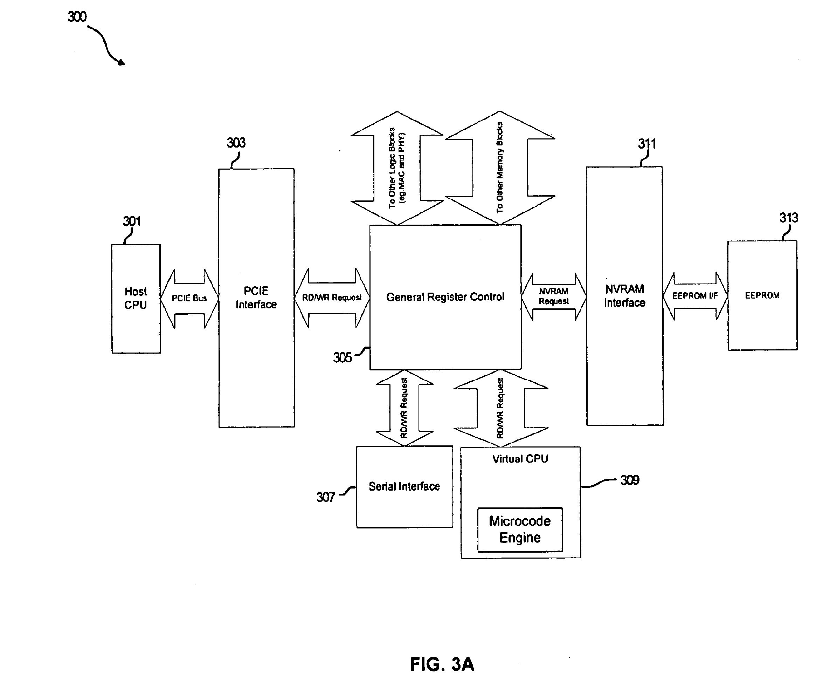

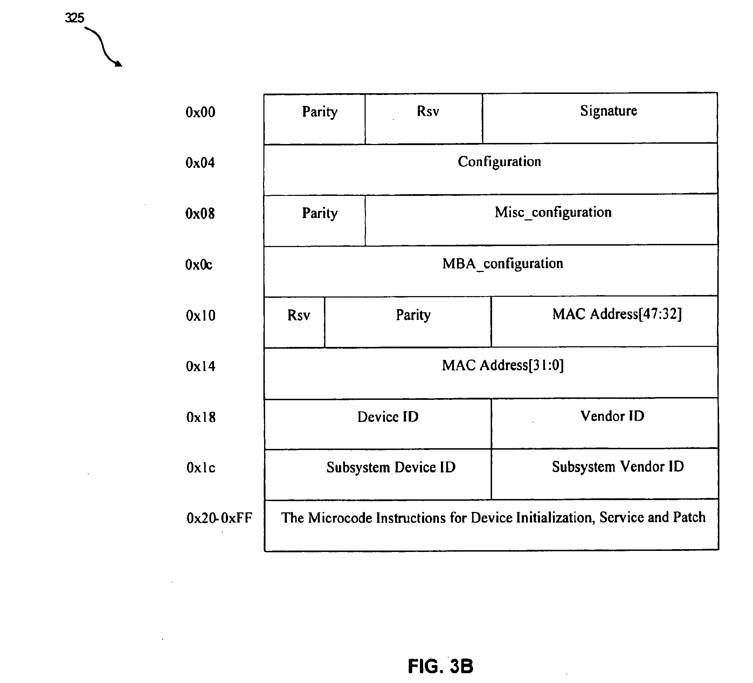

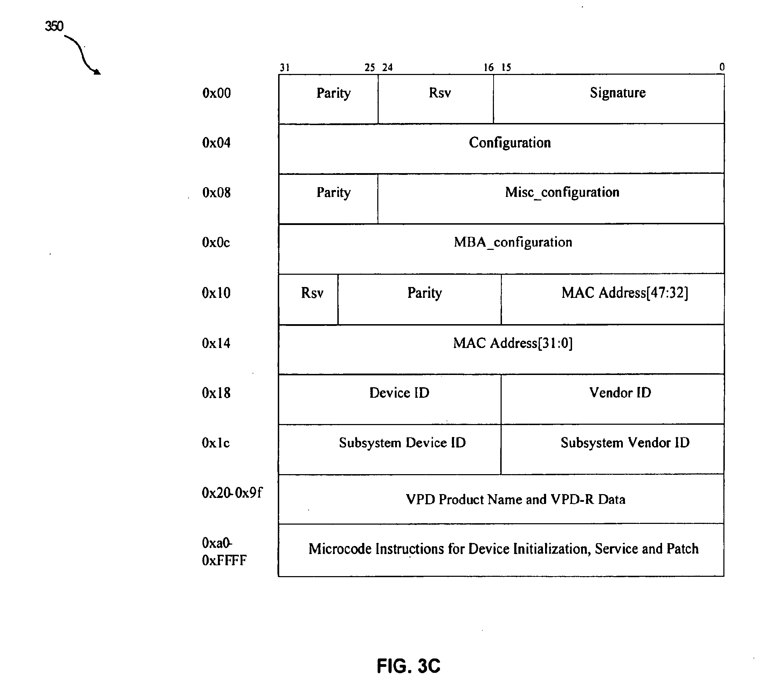

FIG. 3A is a block diagram illustrating an exemplary virtual CPU Ethernet controller, in accordance with an embodiment of the invention. Referring to FIG. 3, there is shown a VCPU Ethernet controller 300 comprising a host CPU 301, a PCI Express interface 303, a general register control (GRC) 305, a serial interface 307, a VCPU 309, an NVRAM interface 311, and an EEPROM 313. The host CPU 301, the PCI Express interface 303, the GRC 305, the VCPU 309 and the EEPROM 313 may be substantially similar to the host 101, the PCl Express interface 103, the memory controller 105, the VCPU 111 and the EEPROM 115 described with respect to FIG. 1. The serial interface 307 may comprise suitable circuitry, logic and/or code that may be enabled for debugging the VCPU Ethernet controller 300. The NVRAM interface 311 may comprise suitable circuitry, logic and/or code that may be enabled to provide an interface to a non-volatile memory such as the EEPROM 313 or a Flash memory.

In operation, the VCPU Ethernet controller 300 operates in various manners distinctly different from a standard embedded CPU Ethernet controller. For example, in accordance with one embodiment of the invention, instead of copying the boot code from an external EEPROM to a CPU code memory (on-chip RAM) and executing after the download, the VCPU 309 may perform an instruction-by-instruction load and execution. Whenever a 64-bit instruction is loaded from the external EEPROM 313 or an on-chip VCPU ROM, it may be executed instantly. The next instruction may then be fetched and executed. This process may continue until the code ends or an IDLE instruction is fetched. Therefore, no data and/or code memory is needed for VCPU implementation. In addition, there is no need for a larger VCPU ROM for EEPROM image load function, since it is loaded and executed one line at a time. A hardware finite-state-machine (FSM) may act as an image loader.

In the VCPU Ethernet Controller 300, the VCPU 309 may access the other function blocks (e.g. 10/100Mbps Ethernet PHY and MAC) and the external EEPROM 313 via the GRC 305 register master interface. The host CPU 301 and the serial interface 307 may access the VCPU 309 registers via the GRC register slave interface. There may be a dedicated on-chip ROM for the VCPU 309 microcode, which may be connected with the VCPU 309 through a ROM interface, which is included in the VCPU 309. The hardware self-boot code, which may comprise microcode instructions, as described with respect to FIG. 2, and user data may be located in the external EEPROM 313 and the VCPU ROM, which is included in the VCPU 309.

The EEPROM image may have two exemplary formats as shown in FIGS. 3B and 3C, for the purpose of device initialization and patch purposes.

FIG. 3B is a block diagram illustrating an exemplary format for the VCPU Ethernet controller EEPROM image, in accordance with an embodiment of the invention. Referring to FIG. 3B, there is shown the first exemplary format 325. The instructions in the EEPROM may be utilized for device initialization and patch purposes. The MAC address, Vendor ID/Device ID, and/or subsystem Vendor ID/Device ID may be in fixed locations of the EEPROM. The size of the EEPROM may be 2 kbits, for example. Device initialization, WOL and device power-down service functions in internal VCPU ROM may be executed. This format may be used in instances where VPD support is not needed.

The definitions for each of the sections of FIG. 3B are described below. The signature, row 0x00 (bits 15:0), for example, may comprise a signature of 0xABCD to indicate a hardware self-boot. Exemplary parity bits in row 0x00 (bits 31:25) are illustrated in Table 4 below.

**Table 4**

| Bit | Definition |
|---|---|
| 31 | Parity bit for Signature bits 23:16. May be a value of '1'-. Odd Parity for "00". |
| 30 | Parity bit for Signature bits 15:8. May be a value of '0'-Odd Parity for "alb". |
| 29 | Parity bit for Signature bits 7:0. May be a value of '0' -Odd Parity for "CD". |
| 28 | Parity bit for Configuration bits 31:24. |
| 27 | Parity bit for Configuration bits 23:16 |
| 26 | Parity bit for Configuration bits 15:8 |
| 25 | Parity bit for Configuration bits 7:0 |

Exemplary definitions for the configuration bits, row 0x04 [31:0] are illustrated below in Table 5.

**Table 5**

| Bit | Definition |
|---|---|
| 31:27 | Bootcode revision. |
| 26:22 | Patch revision |
| 21 | Patch presence |
| 20:13 | Chip revision: Bit 20:17 -- All-layer revision ID, Bit 16:13 -Metal revision ID |
| 12:9 | Reserved |
| 8 | L1 PLL power-down disable. The default value may equal 0. |
| 7 | Super-airplane mode enable |
| 6 | VPD enable: 0 = disable, 1 = enable |
| | LED mode: |
| 5:4 | LED configuration. Two LEDS may be used to 00: Dual Link LED configuration. Two LEDs may be used to indicate 10Mbps and 100Mbps (Phy 1 mode) 01: Link/Speed LED configuration. One LED is used to indicate link status of all 10/100Mbps (Phy 2 mode) 10: Shared Traffic/Link LED Mode. The Link LED performs dual roles: Solid Green, when there is a link. Blink when there is activity. |
| | 11: MAC mode |
| 3:2 | Driver WOL 'auto' setting |
| | In instances where the auto option is selected in driver setting, this configuration may be used by the device driver to set up WOL. |
| | 00: WOL may be disabled |
| | 01: Magic Packet WOL may be enabled |
| | 10: Interesting Packet WOL may be enabled 11: Both Magic and Interesting packet WOL may be enabled |
| | WOL Limit 10 |
| 1 | 0: WOL Speed may be 10/100 Mbps capable |
| | 1: WOL Speed may be 10 Mbps only |
| 0 | WOL Enable 0: WOL Disable, 1: WOL Enable |

Exemplary definitions for the parity bits, row 0x08 [31:24] of the exemplary format 325 are shown below in Table 6.

**Table 6**

| Bit | Definition |
|---|---|
| 31 | Parity bit for misc_configuration[23:16]. |
| 30 | Parity bit for misc_configuration[15:8]. |
| 29 | Parity bit for misc_configuration[7:0]. |
| 28 | Parity bit for MBA_configuration[31:24]. |
| 27 | Parity bit for MBA_configuration[23:16]. |
| 26 | Parity bit for MBA_configuration[15:8]. |
| 25 | Parity bit for MBA_configuration[7:0]. |
| 24 | reserved |

The Misc_configuration row of the exemplary format 325 may be reserved for future expansion. Mis_configuration may be copied to a VCPU configuration shadow2 register during the device boot. The default value may equal 0.

The MBA_configuration bits of row 0x0c [31:0] may be copied to a VCPU configuration register during the device boot. The default value may equal 0. Exemplary definitions for the MBA_configuration bits are shown below in Table 7.

**Table 7**

| Bit | Definition |
|---|---|
| 31 | Reserved |
| 30:27 | MBA link speed configuration (Default may be auto negotiation) |
| 26:25 | Bootstrap method 00: Auto, 01: BBS, 10: INT18, 11: INT19 |
| 24:21 | MBA configuration timeout |
| 20:19 | MBA boot protocol 00: PXE, 01: RPL, 10: BOOTP, 11: iSCSI |
| 18 | MBA hot-key configuration, 0: Ctrl-S, 1: Ctrl-B |
| 17 | Hide MBA banner or not. 0: don't hide, 1:hide |
| 16 | VLAN enable/disable |
| 15:0 | VLAN ID |

Exemplary definitions of the parity bits of row 0x10 [29:16] of the exemplary format 325 are illustrated in Table 8.

**Table 8**

| Bit | Definition |
|---|---|
| 29 | Parity bit for MAC Address bits 47:40. |
| 28 | Parity bit for MAC Address bits 39:32. |
| 27 | Parity bit for MAC Address bits 31:24. |
| 26 | Parity bit for MAC Address bits 23:16. |
| 25 | Parity bit for MAC Address bits 15:8. |
| 24 | Parity bit for MAC Address bits 7:0. |
| 23 | Parity bit for Device ID[15:8]. |
| 22 | Parity bit for Device ID[7:0]. |
| 21 | Parity bit for Vendor ID[15:8]. |
| 20 | Parity bit for Vendor ID[7:0]. |
| 19 | Parity bit for Subsystem Device ID[15:8]. |
| 18 | Parity bit for Subsystem Device ID[7:0]. |
| 17 | Parity bit for Subsystem Vendor ID[15:8]. |
| 16 | Parity bit for Subsystem Vendor ID[7:0]. |

The instructions used to program MAC address register (0x410-0x417), Vendor ID register (0x0), Device ID register (e.g. 0x2), Subsystem Vendor ID register (e.g. 0x2C), Subsystem Device ID register (e.g. 0x2E) may reside in a fixed location on the external EEPROM 313. The VCPU 309 or the host CPU 301 may read/write the device parameters directly from/to the external EEPROM 313

The microcode instructions for device initialization, service and patch, shown in row 0x20-0xFF of the exemplary format 325 may comprise device initialization, service (i.e. WOL), and workarounds.

FIG. 3C is a block diagram illustrating a second exemplary format for the VCPU Ethernet controller EEPROM image, in accordance with an embodiment of the invention. Referring to FIG. 3C, there is shown a second exemplary format 350, which may comprise similar data to that in the exemplary format 325 plus vital product data (VPD). The VPD product name and VPD-R data may be fixed, and found at, for example, offset 0x20-0x9f. The supported EEPROM sizes may range from 4Kbits up to 64Kbits, for example. This format may be useful in instances where there may be a need for VPD support and may provide added flexibility for new applications.

The VCPU 309 may be used to execute the instructions in the external EEPROM 313 or the internal VCPU ROM. Since the user data, such as the MAC address and MBA configuration data, may be simpler to program and update if stored in one location without instructions, the VCPU 309 may be customized to read the user data from the external EEPROM 313 and write the data to the associated registers. This user data may also be protected by the parity bits. In addition, by utilizing this EEPROM data structure, the code and the boot time may be shortened.

To leverage the flexible architecture of the VCPU 309, the fixed function microcode, such as device initialization code, VPD service code, WOL service code, and device power-down service code, may be placed in the internal VCPU ROM. The dynamic function microcode, such as user data, workarounds and new applications/services, may be placed in the external EEPROM 313. This may significantly reduce the external EEPROM 313 size. Moreover, the device boot time may be shortened because fewer instructions may be stored in the slower external EEPROM 313.

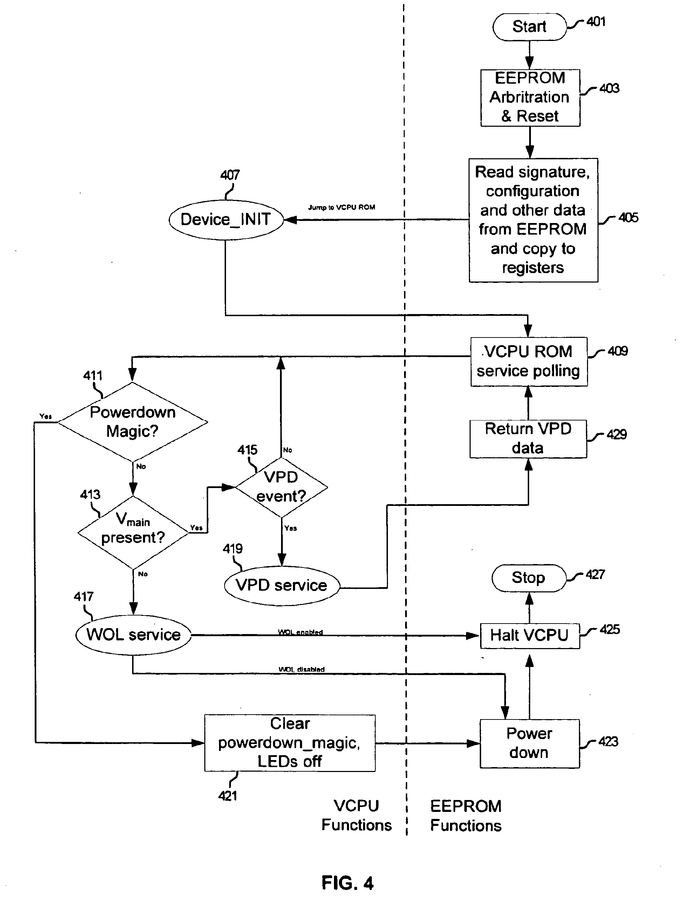

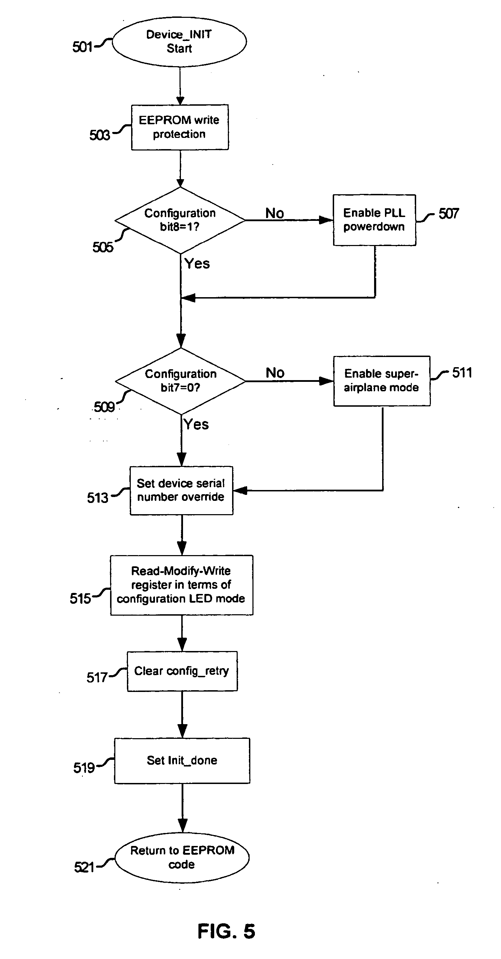

FIG. 4 is a flow diagram illustrating an exemplary VCPU operational process, in accordance with an embodiment of the invention. Referring to FIG. 4, following start step 401, in step 403, the VCPU 309 may arbitrate for access to the EEPROM 313, and may issue an EEPROM reset command after arbitration is won. The purpose of this reset may be to synchronize the NVRAM interface 311 and the EEPROM 313 operations. Following the EEPROM reset, the arbitration may be released, and the process may proceed to step 405. In step 405, the signature (1^{st} DWORD), configuration (2^{nd} DWORD) and other data may be read from the EEPROM 313, and written to a register, for example 0x5104, if both signature and code corruption checks are passed (i.e., parity bits are correct). The VCPU 309 may then read data from the 3^{rd} DWORD to the 8^{th} DWORD, and program to specified registers if no data corruption is found. The process may then jump to the internal VCPU ROM in step 407 to read device initialization code and execute it. The device initialization process (Device_INIT) of step 407 is described further with respect to FIG. 5

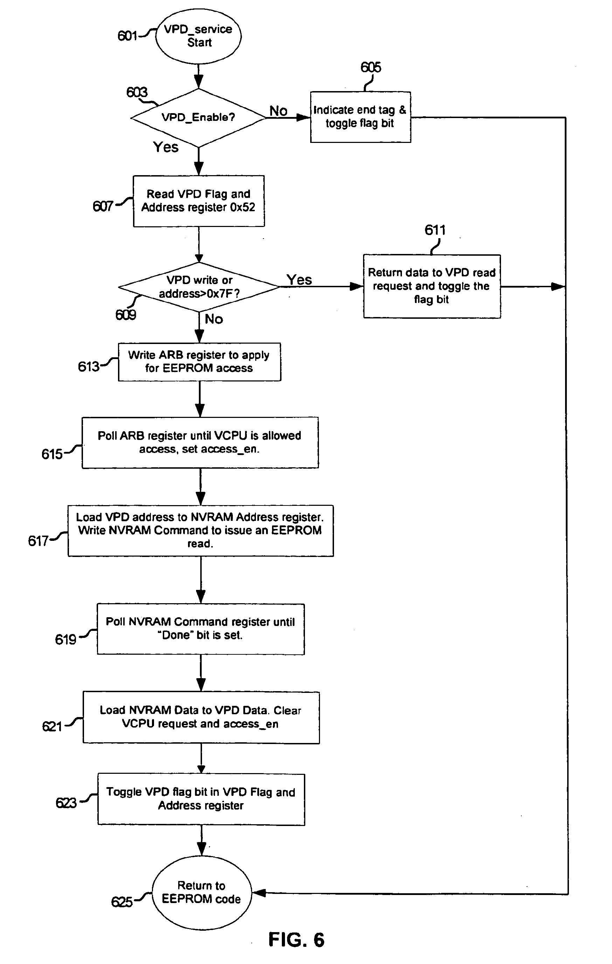

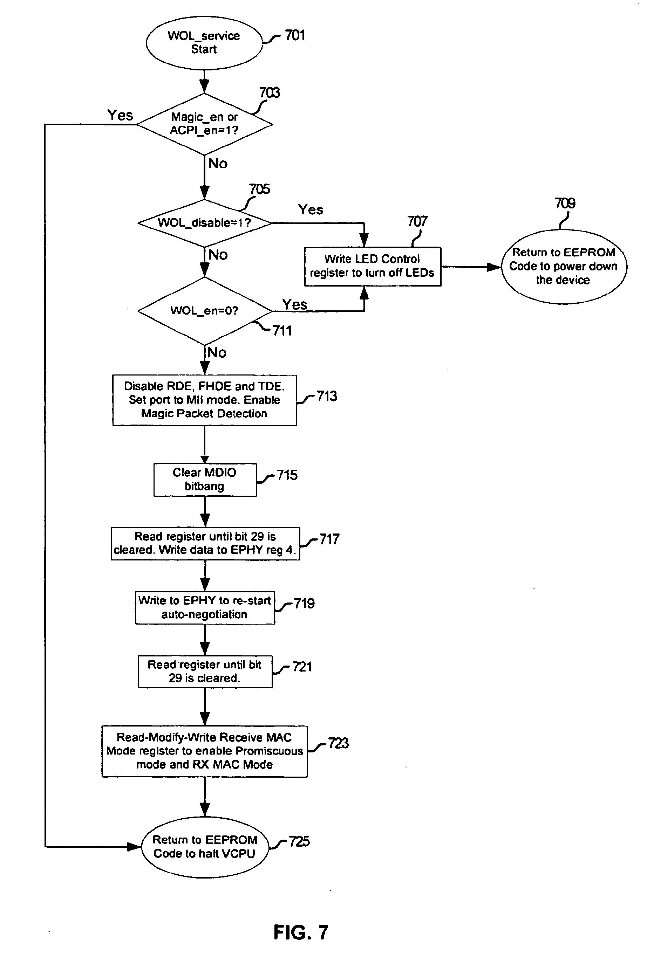

Following device initialization in step 407, the process may jump back to the EEPROM 313 in step 409 to determine whether there may be any workaround code for the device initialization and to begin execution. If not, the process may read the polling code to monitor service events such as a powerdown magic service event, a WOL service event and/or a VPD service event. In step 411, if a powerdown_magic code is present during the service polling in step 409, the process may proceed to step 421 where the powerdown_magic code may be cleared and an LED control register may be set to turn off the status LEDs. This process may be followed by a device power down in step 423, and a halt VCPU command in step 425, followed by stop step 427. If, however, there is no powerdown_magic code present during service polling, the process may proceed to step 413 where the absence of a Vₘₐᵢₙ signal may force the process to step 417 for a WOL service. The WOL service may be described further with respect to FIG. 7. The presence of a Vₘₐᵢₙ signal may force the process to step 415 to test for a VPD event signal. If the VPD event signal is present, the process may proceed to VPD service in step 419. The VPD service of step 419 may be further described with respect to FIG. 6. Following the VPD service of step 419, the VPD data may be returned to the host CPU 301 in step 429, and the process may step back to step 409 for VCPU ROM service polling.

If the VPD event signal is not present in step 415, the process may step back to step 411 to test for a powerdown_magic code again.

After the WOL service of step 417, if WOL is enabled, the process may proceed to step 425 where the VCPU 309 may be halted, followed by stop step 427. If, however, WOL is disabled, the process may proceed to step 423, or power down, before proceeding to halt the VCPU 309 process in step 425 followed by stop step 427.

Following each of the service steps, WOL service in step 417, Powerdown_Magic service in step 411, and/or VPD service in step 419, the VCPU 309 may jump to the EEPROM 313 to determine whether there is any workaround code for the specified service step, and if not, the process may proceed to the appropriate next step following the service step. This process may iterate until an event causes the VCPU power down or halt VCPU of steps 423 and 425.

FIG. 5 is a flow diagram illustrating an exemplary VCPU device initialization process, in accordance with an embodiment of the invention. Referring to FIG. 5, following the Device_INIT start of step 501, in step 503, the read/write/modify register bits may be set for EEPROM write protection and the process may then proceed to step 505 where the configuration bit 8 may be tested. In instances where the configuration bit 8 is not equal to 1, the process proceeds to step 507 where the phase-locked loop (PLL) power down may be enabled before proceeding to step 509. If, however, in step 505, the configuration bit 8 is equal to '1', the process may proceed to step 509. In step 509, if the configuration bit 7 is equal to '0', the process may proceed to step 513, but if the configuration bit 7 is not equal to '0', the process may proceed to step 511, where the super-airplane mode may be enabled before proceeding to step 513. The super-airplane mode may comprise a power management mode in which the whole device may be in low power saving mode if the Ethernet cable is unplugged or no energy is detected from the cable.

In step 513, the device serial number override bit may be set to '1', before proceeding to step 515 where the register, bits 11-12 in an exemplary embodiment, may be set in terms of the status LED configuration mode. If the LED configuration mode, register bits 11-12, for example, may be equal to '11', the PHY register 1 B bit 2 may be set to '1'. The process may then proceed to step 517 where the config_retry register bit may be set to '0', followed by step 519 where init_done may be set to '1', prior to the return to EEPROM code, step 521.

FIG. 6 is a flow diagram illustrating an exemplary VCPU VPD service process, in accordance with an embodiment of the invention. Referring to FIG. 6, after VPD service start step 601, in step 603, if VPD_enable is equal to '1', the process may proceed to step 607. Otherwise, the process may proceed to step 605 where the end tag, 0x78 for example, may be returned and the flag bit may be toggled before proceeding to the end step 625, Return to EEPROM mode.

In step 607, the VPD flag and address register, 0x52 for example, may be read before proceeding to step 609. If the VPD flag is set to write or the address register may be greater than '0x7f, then the process proceeds to step 611 where '0xffffffff may be returned to the VPD read request and the flag bit may be toggled before proceeding to end step 625, Return to EEPROM mode. If VPD write is not enabled and the address is less than 0x7f, the process may proceed to step 613, where the arbitration (ARB) register, 0x7020 for example, may be set to apply for EEPROM access. The ARB register may then be polled in step 615 until the VCPU 309 may be allowed access, and a register, 0x7024 for example, may be written to set access_en, indicating that access is allowed.

The process may then proceed to step 617 where the VPD address may be loaded to the NVRAM address 0x700c, for example, and NVRAM command register 0x7000 may be written to issue an EEPROM read. The process may then proceed to step 619 where the NVRAM command register may be polled until the "done" bit is set, at which time the process may proceed to step 621. In step 621, the NVRAM data may be loaded to VPD data, and the VCPU request and access_en may be cleared, followed by step 623 where the VPD flag bit may be toggled in the VPD flag and address register. The process may then proceed to end step 625, Return to EEPROM code.

FIG. 7 is a flow diagram illustrating the VCPU WOL service process, in accordance with an embodiment of the invention. Referring to FIG. 7, there is shown a flow 700. After start step 701, WOL_service start, in step 703, in instances where Magic_en or ACPI_en is equal to '1', the process may proceed to end step 725, Return to EEPROM code to halt VCPU. Otherwise, the process proceeds to step 705. In step 705, in instances where the WOL-disable register, 0x6890 for example, is equal to `1', the process may proceed to step 707 where the control register, for example 0x40c, may be written to turn off status LEDs and then proceed to step 709, Return to EEPROM Code to power down device. In instances where the WOL-disable register is not equal to '1', the process may proceed to step 711.

In step 711, in instances where the WOL_en register, 0x5104 in an exemplary embodiment, is equal to '0', the process proceeds to step 707 where the control register may be written to turn off status LEDs and then proceed to step 709, Return to EEPROM Code to power down device. In instances where the WOL en register is not equal to '0', the process may proceed to step 713. In step 713, the MAC mode register, for example 0x400, may be set to disable RDE, FHDE and TDE, and to enable Magic Packet detection, where RDE is the Receive Data Engine which may be used to process the received data. FHDE is the frame header descriptor engine which may be used to create a frame header for each frame (including the frame length, protocol, VLAN, CRC status etc.). TDE is the transmit data engine which may be used to process the transmitted data.

The process may then proceed to step 715 where the MDIO bitbang may be cleared, by writing to register 0x44c, for example, before proceeding to step 717. MDIO is the standard serial management interface which may be used to configure PHY registers. In one embodiment of the invention, a function may be provided to allow a host CPU to manipulate the MDIO interface through the register, which may be called MDIO bitbang. In step 717, the register 0x44c may be read until bit 29 may be cleared, at which time 0x1200 may be written to PHY register 0 to restart auto-negotiation. The process may then proceed to step 721 where register 0x44c may be read until bit 29 may be cleared, which may step the process to step 723. In step 723, Receive MAC Mode register, for example 0x468, may be set to enable promiscuous mode and RX MAC mode. Promiscuous mode may be used by Ethernet MAC 109 to pass all received good packets. In normal mode, only the received packets with the destined MAC address may be forwarded to the higher layer. The received packets with the other MAC address may be discarded. The process then steps to end step 725, Return to EEPROM Code to halt VCPU.

In an embodiment of the invention, a method, system and machine-readable code are disclosed for controlling an on-chip Ethernet controller 100 utilizing a virtual CPU 111 comprising a microcode engine that loads a single instruction and executes the instruction prior to loading or executing a subsequent instruction. The instructions may be fetched by the virtual CPU 111 from an external non-volatile memory, such as an EEPROM 115, or on-chip ROM. The virtual CPU 111 may initialize the Ethernet controller 100 and provide patches for supporting hardware workarounds, wake on LAN service, and vital production data such as serial number, product name, manufacturer and related manufacturing data. The virtual CPU 111 may power down the Ethernet controller and may be halted via a particular command and procedure.

Certain embodiments of the invention may comprise a machine-readable storage having stored thereon, a computer program having at least one code section for communicating information within a network, the at least one code section being executable by a machine for causing the machine to perform one or more of the steps described herein.

Accordingly, aspects of the invention may be realized in hardware, software, firmware or a combination thereof. The invention may be realized in a centralized fashion in at least one computer system or in a distributed fashion where different elements are spread across several interconnected computer systems. Any kind of computer system or other apparatus adapted for carrying out the methods described herein is suited. A typical combination of hardware, software and firmware may be a general-purpose computer system with a computer program that, when being loaded and executed, controls the computer system such that it carries out the methods described herein.

One embodiment of the present invention may be implemented as a board level product, as a single chip, application specific integrated circuit (ASIC), or with varying levels integrated on a single chip with other portions of the system as separate components. The degree of integration of the system will primarily be determined by speed and cost considerations. Because of the sophisticated nature of modern processors, it is possible to utilize a commercially available processor, which may be implemented external to an ASIC implementation of the present system. Alternatively, if the processor is available as an ASIC core or logic block, then the commercially available processor may be implemented as part of an ASIC device with various functions implemented as firmware.

The present invention may also be embedded in a computer program product, which comprises all the features enabling the implementation of the methods described herein, and which when loaded in a computer system is able to carry out these methods. Computer program in the present context may mean, for example, any expression, in any language, code or notation, of a set of instructions intended to cause a system having an information processing capability to perform a particular function either directly or after either or both of the following: a) conversion to another language, code or notation; b) reproduction in a different material form. However, other meanings of computer program within the understanding of those skilled in the art are also contemplated by the present invention.

While the invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiments disclosed, but that the present invention will include all embodiments falling within the scope of the appended claims.

## Claims

1. A method for network communication control, the method comprising:
controlling an on-chip Ethernet controller utilizing a virtual CPU comprising a microcode engine that loads a single instruction of a plurality of instructions and executes said instruction prior to loading or executing a subsequent instruction of said plurality of instructions, wherein said plurality of instructions comprises fixed function microcode and dynamic function microcode;
fetching said fixed function microcode by said virtual CPU from an on-chip ROM; and
fetching said dynamic function microcode by said virtual CPU from an external non-volatile memory, wherein said fixed function microcode and said dynamic function microcode comprises a microcode structure with a common bit to indicate whether to utilize an on-chip ROM address or an address of the external non-volatile memory for a particular one of said plurality of instructions.

2. The method according to claim 1, further comprising initiating power down of said Ethernet controller via a particular command and procedure.

3. The method according to claim 1, further comprising halting said virtual CPU based on said power down initiation.

4. The method according to claim 1, wherein said virtual CPU initializes said Ethernet controller.

5. The method according to claim 1, wherein said virtual CPU provides patches for supporting hardware workarounds.

6. The method according to claim 1, wherein said virtual CPU provides wake on LAN service.

7. A system (100, 200, 300) for network communication control, the system (100, 200, 300) comprising:
a virtual CPU (111, 203, 309) comprising a microcode engine that enables controlling an on-chip Ethernet controller, wherein said microcode engine is adapted to load a single instruction of a plurality of instructions and execute said instruction prior to loading or executing a subsequent instruction of said plurality of instructions, wherein said plurality of instructions comprises fixed function microcode and dynamic function microcode; and
wherein said virtual CPU (111, 203, 309) is adapted to fetch said fixed function microcode from an on-chip ROM (201);
wherein said virtual CPU (111, 203, 309) is adapted to fetch said dynamic function microcode from an external non-volatile memory (115, 209, 313), wherein said fixed function microcode and said dynamic function microcode comprises a microcode structure with a common bit to indicate whether to utilize an on-chip ROM address or an address of the external non-volatile memory for a particular one of said plurality of instructions.

8. The system (100, 200, 300) according to claim 7, wherein said virtual CPU (111, 203, 309) enables initiating power down of said Ethernet controller via a particular command and procedure.

9. The system (100, 200, 300) according to claim 7, wherein said virtual CPU (111, 203, 309) enables halting of said virtual CPU (111, 203, 309) based on said power down initiation.

10. A machine-readable storage having stored thereon, a computer program having at least one code section for network communication control, the at least one code section being executable by a machine for causing the machine to perform steps comprising:
controlling an on-chip Ethernet controller utilizing a virtual CPU comprising a microcode engine that loads a single instruction of a plurality of instructions and executes said instruction prior to loading or executing a subsequent instruction of said plurality of instructions, wherein said plurality of instructions comprises fixed function microcode and dynamic function microcode;
fetching said fixed function microcode by said virtual CPU from an on-chip ROM;
fetching said dynamic function microcode by said virtual CPU from an external non-volatile memory, wherein said fixed function microcode and said dynamic function microcode comprises a microcode structure with a common bit to indicate whether to utilize an on-chip ROM address or an address of the external non-volatile memory for a particular one of said plurality of instructions; and
using said microcode structure to provide greater flexibility by partitioning microcode in the on-chip ROM and the external non-volatile memory.

## Patentansprüche

1. Verfahren zur Netzwerk-Kommunikations-Steuerung, wobei das Verfahren umfasst:
Steuern eines On-Chip Ethernet-Controllers mittels einer virtuellen CPU, die eine Mikrocode-Maschine aufweist, die einen einzigen Befehl einer Vielzahl von Befehlen lädt und den Befehl vor dem Laden oder Ausführen eines Folgebefehls der Vielzahl von Befehlen ausführt, wobei die Vielzahl von Befehlen einen festen Funktionsmikrocode und einen dynamischen Funktionsmikrocode enthalten;
Abholen des festen Funktionsmikrocodes durch die virtuelle CPU aus einem On-Chip ROM; und
Abholen des dynamischen Funktionsmikrocodes durch die virtuelle CPU aus einem externen nichtflüchtigen Speicher, wobei der feste Funktionsmikrocode und der dynamische Funktionsmikrocode eine Mikrocodestruktur mit einem gemeinsamen Bit aufweisen, um anzugeben, ob eine On-Chip ROM-Adresse oder eine Adresse des externen nicht-flüchtigen Speichers für einen bestimmten der Vielzahl von Befehlen zu verwenden ist.

2. Verfahren nach Anspruch 1, das des Weiteren das Initiieren des Ausschaltens des Ethernet-Controllers über einen bestimmten Befehl und ein bestimmtes Verfahren umfasst.

3. Verfahren nach Anspruch 1, das des Weiteren das Anhalten der virtuellen CPU basierend auf der Ausschalt-Initiierung umfasst.

4. Verfahren nach Anspruch 1, wobei die virtuelle CPU den Ethernet-Controller initiiert.

5. Verfahren nach Anspruch 1, wobei die virtuelle CPU Korrekturen zum Unterstützen von Hardware-Hilfskonstruktionen bereitstellt.

6. Verfahren nach Anspruch 1, wobei die virtuelle CPU Wake on LAN Dienst bereitstellt.

7. System (100, 200, 300) zur Netzwerk-Kommunikations-Steuerung, wobei das System (100, 200, 300) aufweist:
eine virtuelle CPU (111, 203, 309) mit einer Mikrocode-Maschine, die das Steuern eines On-Chip Ethernet-Controllers ermöglicht, wobei die Mikrocode-Maschine so ausgelegt ist, dass sie einen einzigen Befehl einer Vielzahl von Befehlen lädt und den Befehl vor dem Laden oder Ausführen eines Folgebefehls der Vielzahl von Befehlen ausführt, wobei die Vielzahl von Befehlen einen festen Funktionsmikrocode und einen dynamischen Funktionsmikrocode enthalten; und
wobei die virtuelle CPU (111, 203, 309) so ausgelegt ist, dass sie den festen Funktionsmikrocode aus einem On-Chip ROM (201) abholt;
wobei die virtuelle CPU (111, 203, 309) so ausgelegt ist, dass sie den dynamischen Funktionsmikrocode aus einem externen nichtflüchtigen Speicher (115, 209, 313) abholt, wobei der feste Funktionsmikrocode und der dynamische Funktionsmikrocode eine Mikrocodestruktur mit einem gemeinsamen Bit aufweisen, um anzugeben, ob eine On-Chip ROM-Adresse oder eine Adresse des externen nicht-flüchtigen Speichers für einen bestimmten der Vielzahl von Befehlen zu verwenden ist.

8. System (100, 200, 300) nach Anspruch 7, wobei die virtuelle CPU (111, 203, 309) das Initiieren des Ausschaltens des Ethernet Controllers über einen bestimmten Befehl und ein bestimmtes Verfahren ermöglicht.

9. System (100, 200, 300) nach Anspruch 7, wobei die virtuelle CPU (111, 203, 309) das Anhalten der virtuellen CPU (111, 203, 309) basierend auf der Abschalte-Initiierung ermöglicht.

10. Maschinenlesbarer Speicher mit einem darauf gespeicherten Computerprogramm mit wenigstens einem Code-Abschnitt zur Netzwerk-Kommunikations-Steuerung, wobei der wenigstens eine Code-Abschnitt von einer Maschine ausführbar ist, um zu veranlassen, dass die Maschine die folgenden Schritte durchführt:
Steuern eines On-Chip Ethernet-Controllers mittels einer virtuellen CPU, die eine Mikrocode-Maschine aufweist, die einen einzigen Befehl einer Vielzahl von Befehlen lädt und den Befehl vor dem Laden oder Ausführen eines Folgebefehls der Vielzahl von Befehlen ausführt, wobei die Vielzahl von Befehlen einen festen Funktionsmikrocode und einen dynamischen Funktionsmikrocode enthalten;
Abholen des festen Funktionsmikrocodes durch die virtuelle CPU aus einem On-Chip ROM; und
Abholen des dynamischen Funktionsmikrocodes durch die virtuelle CPU aus einem externen nichtflüchtigen Speicher, wobei der feste Funktionsmikrocode und der dynamische Funktionsmikrocode eine Mikrocodestruktur mit einem gemeinsamen Bit aufweisen, um anzugeben, ob eine On-Chip ROM-Adresse oder eine Adresse des externen nicht-flüchtigen Speichers für einen bestimmten der Vielzahl von Befehlen zu verwenden ist; und
Verwenden der Mikrocodestruktur, um größere Flexibilität bereitzustellen, indem Mikrocode auf das On-Chip ROM und den externen nicht flüchtigen Speicher aufgeteilt wird.

## Revendications

1. Procédé de contrôle de communication de réseau, le procédé comprenant :
le contrôle d'un contrôleur Ethernet sur puce utilisant une UC virtuelle comprenant un moteur de microcode qui charge une instruction unique parmi une pluralité d'instructions et exécute ladite instruction avant le chargement ou l'exécution d'une instruction suivante parmi ladite pluralité d'instructions, dans lequel ladite pluralité d'instructions comprend un microcode de fonction fixe et un microcode de fonction dynamique ;
la recherche dudit microcode de fonction fixe par ladite UC virtuelle dans une ROM sur puce ; et
la recherche dudit microcode de fonction dynamique par ladite UC virtuelle dans une mémoire non volatile externe, dans lequel ledit microcode de fonction fixe et ledit microcode de fonction dynamique comprennent une structure de microcode avec un bit commun pour indiquer s'il convient d'utiliser une adresse de la ROM sur puce ou une adresse de la mémoire non volatile externe pour une particulière de ladite pluralité d'instructions.

2. Procédé selon la revendication 1, comprenant en outre l'initiation d'une coupure d'alimentation dudit contrôleur Ethernet par l'intermédiaire d'une commande et d'une procédure particulières.

3. Procédé selon la revendication 1, comprenant en outre l'arrêt de ladite UC virtuelle sur la base de ladite initiation d'une coupure d'alimentation.

4. Procédé selon la revendication 1, dans lequel ladite UC virtuelle initialise ledit contrôleur Ethernet.

5. Procédé selon la revendication 1, dans lequel ladite UC virtuelle prévoit des correctifs pour supporter des solutions de rechange matérielles.

6. Procédé selon la revendication 1, dans lequel ladite UC virtuelle prévoit un réveil sur un service LAN.

7. Système (100, 200, 300) pour un contrôle de communication de réseau, le système (100, 200, 300) comprenant :
une UC virtuelle (111, 203, 309) comprenant un moteur de microcode qui permet de contrôler un contrôleur Ethernet sur puce, dans lequel ledit moteur de microcode est adapté à charger une instruction unique parmi une pluralité d'instructions et à exécuter ladite instruction avant le chargement ou l'exécution d'une instruction suivante parmi ladite pluralité d'instructions, dans lequel ladite pluralité d'instructions comprend un microcode de fonction fixe et un microcode de fonction dynamique ; et
dans lequel ladite UC virtuelle (111, 203, 309) est adaptée à rechercher ledit microcode de fonction fixe dans une ROM sur puce (201) ;
dans lequel ladite UC virtuelle (111, 203, 309) est adaptée à rechercher ledit microcode de fonction dynamique dans une mémoire non volatile externe (115, 209, 313), dans lequel ledit microcode de fonction fixe et ledit microcode de fonction dynamique comprennent une structure de microcode avec un bit commun pour indiquer s'il convient d'utiliser une adresse de la ROM sur puce ou une adresse de la mémoire non volatile externe pour une particulière de ladite pluralité d'instructions.

8. Système (100, 200, 300) selon la revendication 7, dans lequel ladite UC virtuelle (111, 203, 309) permet l'initiation d'une coupure d'alimentation dudit contrôleur Ethernet par l'intermédiaire d'une commande et d'une procédure particulières.

9. Système (100, 200, 300) selon la revendication 7, dans lequel ladite UC virtuelle (111, 203, 309) permet l'arrêt de ladite UC virtuelle (111, 203, 309) sur la base de ladite initiation d'une coupure d'alimentation.

10. Stockage lisible par une machine ayant, stocké sur celui-ci, un programme informatique ayant au moins une section de code pour un contrôle de communication de réseau, l'au moins une section de code étant exécutable par une machine pour faire en sorte que la machine mette en oeuvre des étapes comprenant :
le contrôle d'un contrôleur Ethernet sur puce utilisant une UC virtuelle comprenant un moteur de microcode qui charge une instruction unique parmi une pluralité d'instructions et exécute ladite instruction avant le chargement ou l'exécution d'une instruction suivante parmi ladite pluralité d'instructions, dans lequel ladite pluralité d'instructions comprend un microcode de fonction fixe et un microcode de fonction dynamique ;
la recherche dudit microcode de fonction fixe par ladite UC virtuelle dans une ROM sur puce ;
la recherche dudit microcode de fonction dynamique par ladite UC virtuelle dans une mémoire non volatile externe, dans lequel ledit microcode de fonction fixe et ledit microcode de fonction dynamique comprennent une structure de microcode avec un bit commun pour indiquer s'il convient d'utiliser une adresse de la ROM sur puce ou une adresse de la mémoire non volatile externe pour une particulière de ladite pluralité d'instructions ; et
l'utilisation de ladite structure de microcode pour donner une plus grande flexibilité en partitionnant le microcode dans la ROM sur puce et la mémoire non volatile externe.
